Europäisches Patentamt

European Patent Office

Office européen des brevets

(11) Veröffentlichungsnummer: **0 328 719**

**A2**

## (12) EUROPÄISCHE PATENTANMELDUNG

(21) Anmeldenummer: 88106162.6

(22) Anmeldetag: 18.04.88

(51) Int. Cl.⁴: **G06K 9/00 , A61B 5/10 , G07C 9/00**

Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 18.04.87 CH 3697/87

(43) Veröffentlichungstag der Anmeldung:
23.08.89 Patentblatt 89/34

(84) Benannte Vertragsstaaten:
AT BE CH DE ES FR GB GR IT LI LU NL SE

(71) Anmelder: **Brodmann, Friedrich G.**
**Allmannsdorferstrasse 70**
**D-7750 Konstanz(DE)**

(72) Erfinder: **Brodmann, Friedrich G.**
**Allmannsdorferstrasse 70**
**D-7750 Konstanz(DE)**

(74) Vertreter: **Köster, Hajo, Dr. et al**
**Jaeger, Steffens & Köster Patentanwälte**
**Pippinplatz 4a**
**D-8035 München-Gauting(DE)**

(54) **Verfahren und Vorrichtungen zur Identifizierung von Linienmustern und Anwendung des Verfahrens zum Sichern von Panzerschränken und ähnlichen Vorrichtungen.**

(57) Die Erfindung betrifft ein Verfahren und eine Vorrichtung zur Identifizierung von Linienmustern, insbesondere von Fingerabdrücken. Von den Linienmustern werden zuerst positive Dia-Vergrößerungen hergestellt und mit positiven und negativen Dia-Vergrößerungen eines Sollmusters verglichen. Der Vergleich erfolgt in vier Stufen steigender Genauigkeit: Die erste Prüfstufe besteht in einfacher Deckung des positiven Dias mit dem negativen Vergleichsdia; die zweite Stufe umfaßt die Ausmessung digitaler Koordinaten und deren mathematische Auswertung; die dritte Stufe ist ein interferometrisches Verfahren mit Ausmessung von Beugungsmustern und die vierte Stufe beruht auf der Prüfung auf Auslöschung in holographischer Anordnung.

Die Anwendung für eine Vorrichtung zur Sicherung von Panzerschränken und dgl. ist anhand von Figuren illustriert. Zur Veröffentlichung wird Fig. 11 vorgeschlagen.

EP 0 328 719 A2

EP 0 328 719 A2

**Verfahren und Vorrichtungen zur Identifikation von Linienmustern und Anwendung des Verfahrens zum Sichern von Panzerschränken und ähnlichen Vorrichtungen.**

Gegenstand der vorliegenden Erfindung ist ein Verfahren zur Identifizierung von Linienmustern durch Vergleich mit einem reell vorliegenden oder auch elektronisch gespeichertem Sollmuster sowie dessen Verwendung auf verschiedenen Gebieten der Technik. Eine besonders wichtige Anwendung der Erfindung ist die Identifikation von Fingerabdrücken sowie deren Verwendung zur Absicherung des Öffnungsmechanismus von verschließbaren Behältern und Räumlichkeiten, wie Panzerschränken und ähnlichen Vorrichtungen.

Die Absicherung von verschließbaren Behältern und Räumlichkeiten gegenüber unbefugtem Öffnen durch nicht berechtigte Personen ist eine Aufgabe, für die seit sehr langer Zeit eine große Anzahl der verschiedensten Lösungen vorgeschlagen worden ist. Die allgemein gebräuchlichste Lösung besteht darin, die Türen zu diesen Behältern oder Räumlichkeiten mit Schlössern zu versehen, die nur mit dem dazu passenden Schlüssel geöffnet werden können. Typische Beispiele für diesen Stand der Technik sind z.B. die Schweizerische Patentschrift 636 400 oder das Belgische Patent 874 278.

Naturgemäß ist immer wieder versucht worden, solche Sicherheitsvorrichtungen zu hintergehen; mit dem steigenden Raffinement solcher Versuche ist jedoch auch die technische Entwicklung der Sicherheitsvorrichtungen selbst immer weiter fortgeschritten. So wurden z.B. Sicherheitstüren mit mehreren unabhängigen, von verschiedenen Personen zu bedienenden Schlössern entwickelt, Schlösser, die nur unter Kenntnis bestimmter Codewörter oder- Zahlen oder nur zu bestimmten Zeiten geöffnet werden können u.s.w.

Trotz aller dieser Anstrengungen ist aber bis heute noch kein absolut sicheres System bekannt geworden, das allen Hintergehungs- oder Überlistungsversuchen standhalten würde. Insbesondere muß immer wieder damit gerechnet werden, daß Schlüssel gestohlen werden, oder daß Öffnungsberechtigte Personen mit Gewalt zur Preisgabe ihrer Schlüssel oder des geheimen Codes gezwungen werden. Durch die vorliegende Erfindung soll ein Beitrag zur Verbesserung der Sicherheit solcher Vorrichtungen geboten werden. Diese besondere Anwendung der Erfindung beruht darauf, daß persönliche körperliche Merkmale, insbesondere die Fingerabdrücke der öffnungsberechtigten Personen für die Auslösung des Öffnungsmechanismus herangezogen werden. Es wird dadurch erreicht, daß sich der Öffnungsberechtigte jedesmal durch Vorweisen eines unveränderlichen und nicht zu fälschenden körperlichen Merkmals vor dem Öffnungsmechanismus auszuweisen hat. Eine besonders hohe Sicherheit kann zusätzlich dadurch erreicht werden, daß für die Öffnung der Vorrichtung die Kombination von Fingerabdrücken mehrerer berechtigter Personen verlangt wird, wobei die Vorrichtung selbst noch eine Auswahl aus dem vollständigen Satz aller Abdrücke treffen kann, die möglicherweise auch den Berechtigten selbst unbekannt ist.

Voraussetzung für diese Anwendung ist das erfindungsgemäße Verfahren zur Identifikation von Linienmustern. Das Verfahren beruht darauf, daß von dem zu identifizierenden Linienmuster in einem ersten Schritt eine positive vergrößerte Diakopie hergestellt wird. (z.B. mit einer Sofortbildkamera), die dann in weiteren Schritten von steigender Genauigkeit mit einem gespeicherten Sollmuster in gleichem Maßstab verglichen wird, wobei im Verlauf dieses Vergleichsverfahrens die Identität des zu untersuchenden Linienmusters mit dem gespeicherten Muster bestätigt oder verworfen wird.

In einem ersten Schritt des Vergleichsverfahrens wird das zu prüfende Muster deckungsgleich über ein Dia-Negativ des Sollmusters gelegt und im durchfallenden Licht geprüft. Falls die beiden Muster identisch sind, ergeben alle Bildstellen des Dia-Paars infolge gegengleicher Schwärzung ein gleiches durchschnittliches Grau; an keiner Bildstelle kann ungeschwächtes Licht durchfallen.

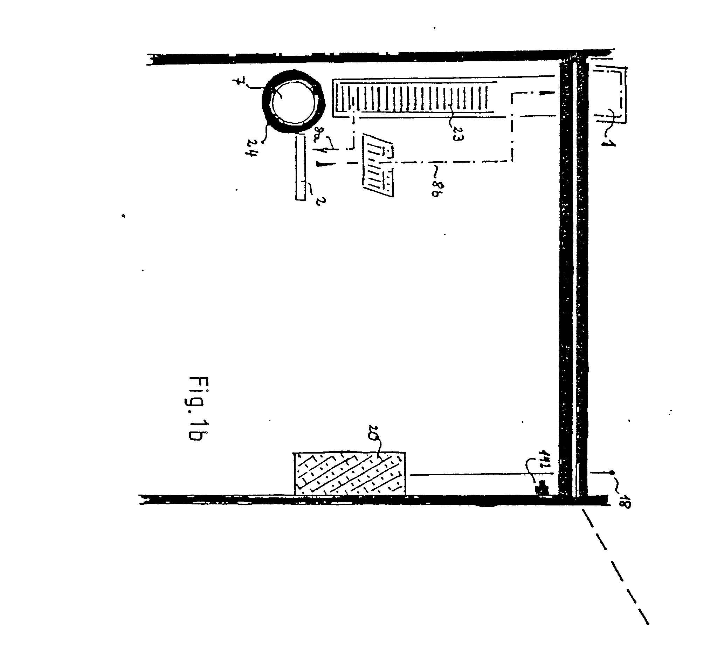

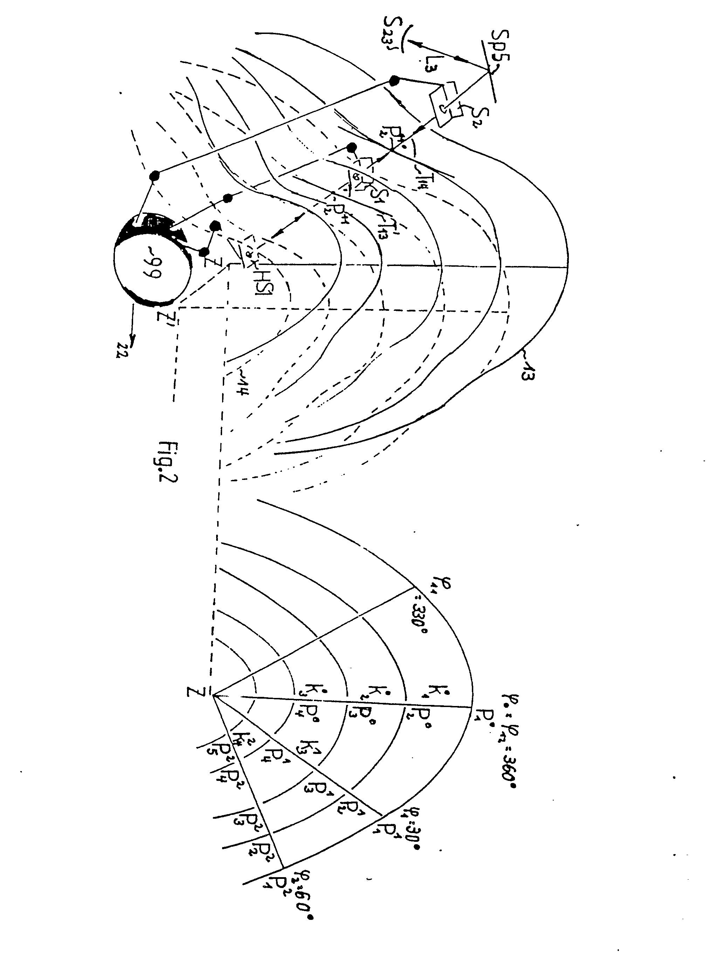

Der zweite Prüfungsschritt beruht auf der Ausmessung von Koordinaten eines Netzes von ausgewählten Bildstellen in digitaler Form und Vergleich einer Matrix von Koordinaten des zu prüfenden Musters mit der entsprechenden Matrix des Sollmusters. Als Koordinatennetz dient dabei eine von einem gemeinsamen Zentrum ausgehende reguläre Schar von Strahlen mit gleichen Winkelabständen, z.B. 12 Strahlen im Winkelabstand von je 30°, wie dies in der Figur 2 dargestellt ist. Ausgemessen werden die Polarkoordinaten der Schnittpunkte aller Strahlen mit den einzelnen Linien des Musters, in der Figur 2 mit $P_1^0$ , $P_2^0$ , $P_3^0$ , ... $P_1^1$ , $P_2^1$ , $P_3^1$ , ... $P_1^{11}$ , $P_2^{11}$ , $P_3^{11}$ , ... bezeichnet.

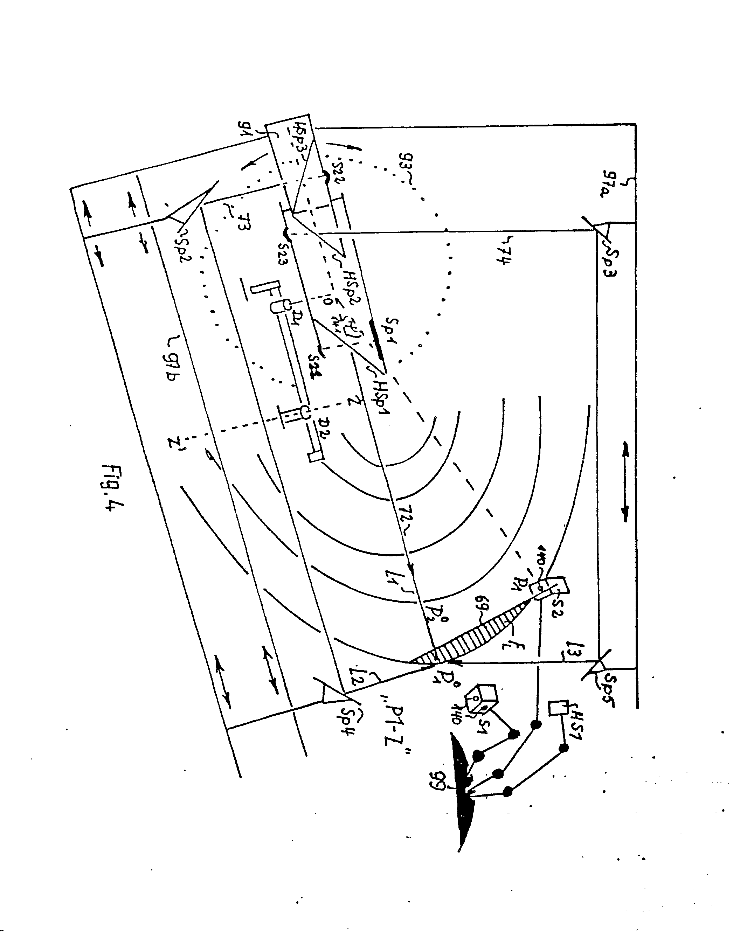

Zur Bestimmung dieser Schnittpunkte wird, wie in Fig. 4 dargestellt, der Strahl eines um das Zentrum Z drehbaren Lasers mittels der halbdurchlässigen Spiegel $HSp_1$ und $HSp_2$ aufgeteilt und über die vier Spiegel $Sp_2$, $Sp_3$, $Sp_4$, und $Sp_5$ auf einem Punkt der äußersten Linie des Musters derart zusammengeführt, daß im Punkt $P_1^0$ der Strahl $L_1$ die Normale und der Strahl $L_3$ die Tangente bildet, wobei die drei Strahlen $L_1$, $L_2$, und $L_3$ zusammen ein orthogonales Dreibein bilden sollen. Die weiteren Schnittpunkte des Strahls $L_1$ mit den weiter innen gelegenen Linien des Linienmusters sind dann die Punkte $P_1^0$ , $P_2^0$ , $P_3^0$ , ... usw. Dieses Verfahren wird, nach Drehung des Lasers um das Zentrum Z um einen gewählten Winkelbetrag wiederholt

2

und man erhält damit die Punkte $P_1^1$, $P_2^1$, $P_3^1$, ... usw. Durch weitere Drehungen des Lasers um den gleichen Winkelbetrag werden schließlich alle Schnittpunkte des Linienmusters mit der Strahlenschar bestimmt. Sodann werden die Abstände zwischen allen jeweils auf einem Strahl liegenden Punkten $P_1^0$-$P_2^0$, $P_2^0$-$P_3^0$, ... $P_1^1$-$P_2^1$, $P_2^1$-$P_3^1$, ... bis $P_1^n$-$P_2^n$, $P_2^n$-$P_3^n$, ... bestimmt, indem man längs eines Strahls mit einer photoelektrischen Sonde von einer Linie des Musters bis zur nächsten fährt, und dabei die Anzahl der dabei durchlaufenen Wellenmaxima des Lasers zählt. Aus der bekannten Wellenlänge des Lasers folgt der Abstand zwischen je zwei gemessenen Punkten.

Zur mathematischen Auswertung der so gefundenen Punktematrix wird zunächst eine Differenzmatrix nach folgendem Schema gebildet:

$$k_1^0 = P_1^0 - P_2^0, \quad k_2^0 = P_2^0 - P_3^0, \quad \ldots, \quad k_{j-1}^0 = P_{j-1}^0 - P_j^0$$

$$\vdots$$

$$k_1^1 = P_1^1 - P_2^1, \quad k_2^1 = P_2^1 - P_3^1, \quad \ldots, \quad k_{j-1}^1 = P_{j-1}^1 - P_j^1$$

$$\vdots$$

$$k_1^i = P_1^i - P_2^i, \quad k_2^i = P_2^i - P_3^i, \quad \ldots, \quad k_{j-1}^i = P_{j-1}^i - P_j^i$$

Aus den so gefundenen Werten bildet man die weitere Differenzmatrix

$$n_{12}^0 = k_1^0 - k_2^0, \quad n_{23}^0 = k_2^0 - k_3^0, \quad \ldots, \quad n_{j-2/j-1}^0 = k_{j-2}^0 - k_{j-1}^0$$

$$\vdots$$

$$n_{12}^1 = k_1^1 - k_2^1, \quad n_{23}^1 = k_2^1 - k_3^1, \quad \ldots, \quad n_{j-2/j-1}^1 = k_{j-2}^1 - k_{j-1}^1$$

$$\vdots$$

$$n_{12}^i = k_1^i - k_2^i, \quad n_{23}^i = k_2^i - k_3^i, \quad \ldots, \quad n_{j-2/j-1}^i = k_{j-2}^i - k_{j-1}^i$$

Dabei werden aus den gemessenen Punkten sowohl für das zu identifizierende Linienmuster die Werte

$$n_{12}^i, \quad n_{23}^i, \quad \ldots \ldots \ldots \ldots \ldots \ldots \ldots \ldots n_{j-2/j-1}^i$$

als auch zum Vergleich die entsprechenden Werte

$$n_{12}^{i'}, \quad n_{23}^{i'}, \quad \ldots \ldots \ldots \ldots \ldots \ldots \ldots \ldots n_{j-2/j-1}^{i'}$$

für das zum Vergleich dienende Sollmuster gemessen und berechnet. Dabei brauchen die letzteren Werte nur einmal berechnet zu werden; sie können nachher im Speicher des Rechners zurückbehalten und immer wieder verwendet werden.

Durch Bildung aller Differenzen

$$n^i_{12} - n^{i'}_{12}, \quad n^i_{23} - n^{i'}_{23}, \quad n^i_{34} - n^{i'}_{34}, \quad \ldots\, n^i_{j-2/j-1} - n^{i'}_{j-2/j-1}$$

die sämtlich bei Übereinstimmung der Muster den Wert 0 ergeben müssen, kann festgestellt werden, ob das zu identifizierende Muster dem vorgegebenen Muster entspricht.Nach den in der beschriebenen Auswertung verwendeten Bezeichnungen Z für das Zentrum der Strahlenschar und Kreuzungspunkten $P_1$ etc, soll das Verfahren im Gebrauch "$P_1$-Z-Verfahren" genannt werden.

In gewissen voraussehbaren Fällen wird das soeben beschriebene Verfahren zur eindeutigen Identifikation des Linienmusters nicht ausreichen. Insbesondere sind bei Fingerabdrücken Formen bekannt, die von dem üblichen Muster von mehr oder weniger parallelen gekrümmten Linien abweichen, z.b. einzelne, in einer Spitze endigende Linien oder auch Verzweigungsstellen. Trifft das im vorhergehenden Abschnitt beschriebene Koordinatennetz auf eine solche Stelle, so versagt das Verfahren, das auf dem Errichten einer Tangente am Schnittpunkt des Koordinatenstrahls mit der Abdrucklinie beruht.

Für diese Fälle sind die im Patentanspruch 1 unter c) und d) beschriebenen Identifikationsverfahren vorgesehen. In beiden Fällen werden Diapositive des zu identifizierenden und des Vergleichsmusters deckungsgleich übereinander angeordnet.

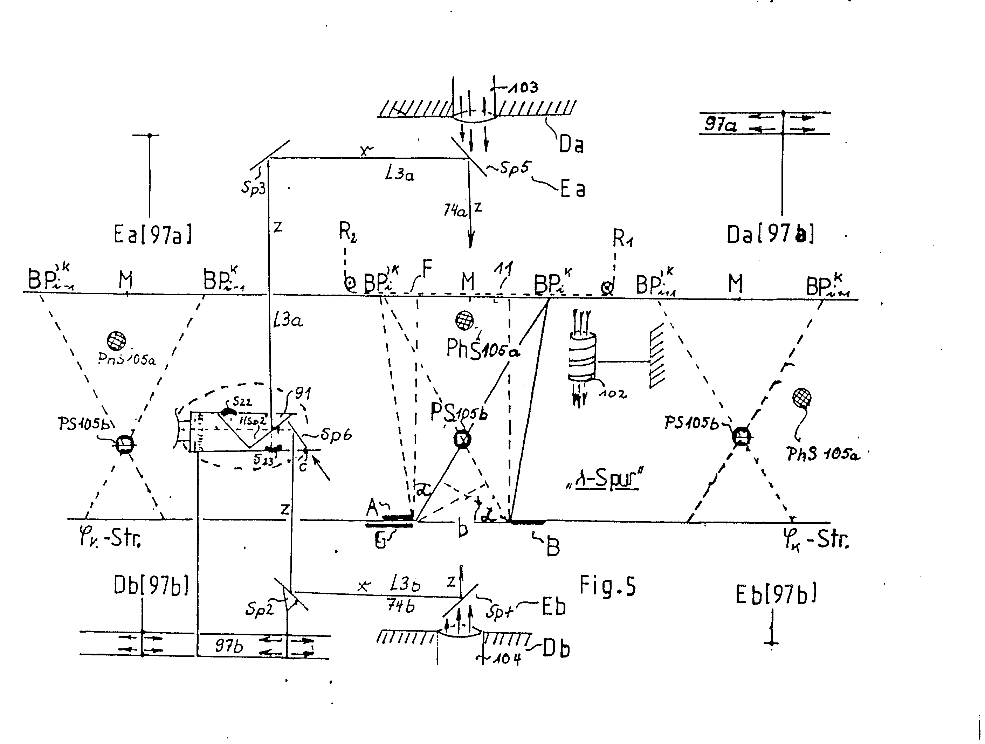

Bei dem unter c) erwähnten interferometrischen Verfahren wird das zur Deckung gebrachte Diapositivpaar von einem Laser durchstrahlt (Fig. 5); auf dem Schirm M bildet sich bei einer geringfügigen gegenseitigen Verschiebung ein Beugungsmuster, das ausgemessen werden kann. Das in diesem Verfahrensschritt verwendete Verfahren, nach welchem sich die Linienmuster bis auf Wellenlängengenauigkeit miteinander vergleichen lassen, heißt danach "λ-Spur-Verfahren".

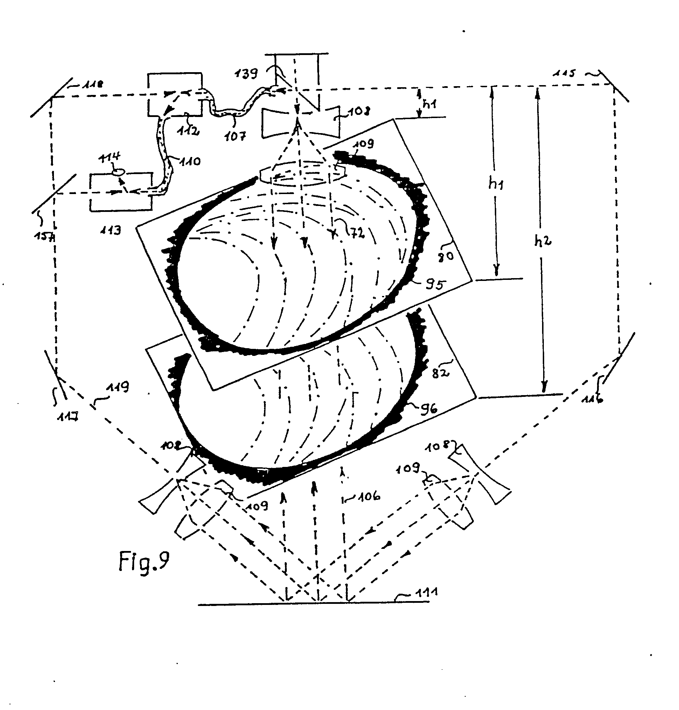

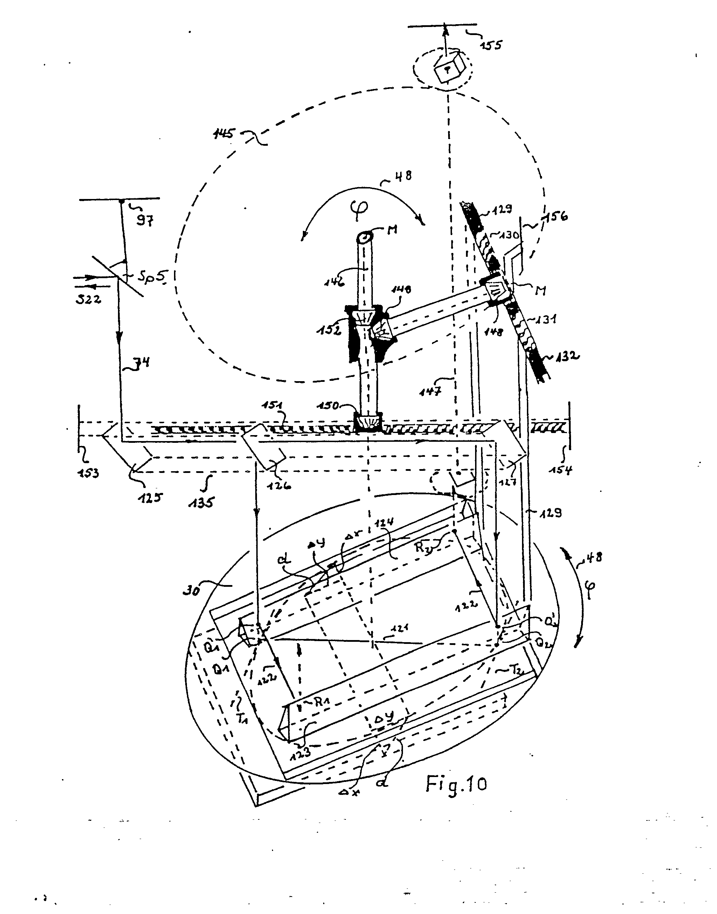

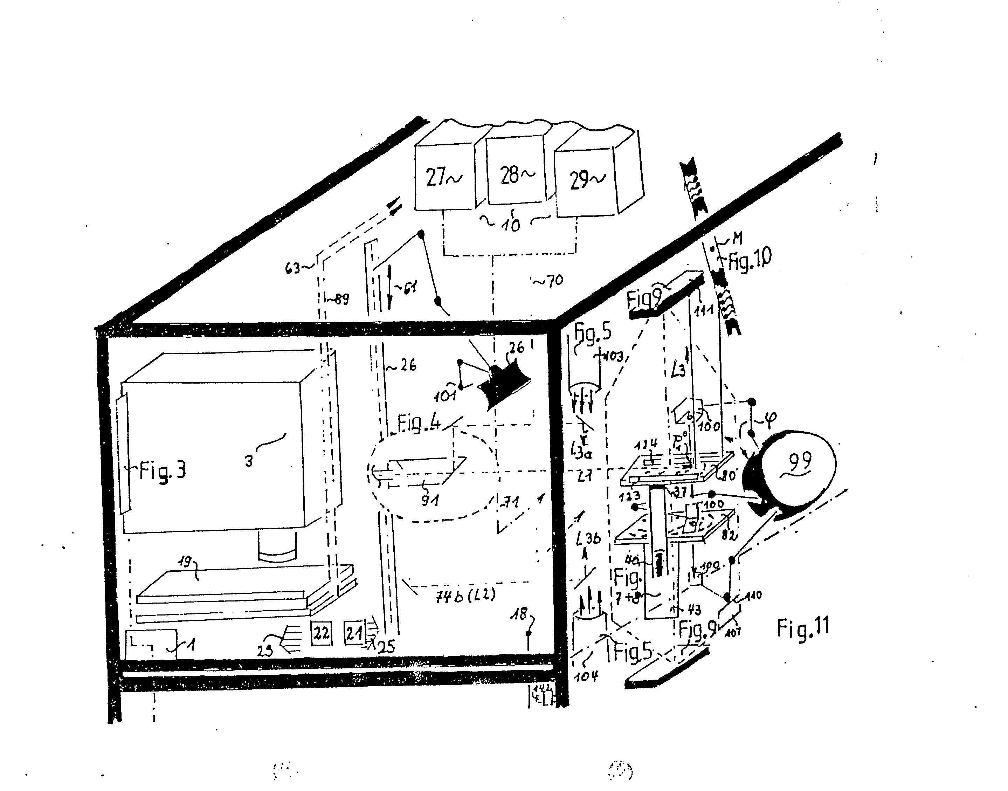

In dem unter d) erwähnten holographischen Verfahren (siehe Fig. 9) werden die beiden zu vergleichenden Muster von einem Laser, dessen Licht mittels eines Halbspiegels geteilt wurde, auf zwei verschiedenen Wegen bestrahlt. Bei der Wiedervereinigung der beiden Strahlen tritt, im Falle der Identität der beiden Muster Auslöschung ein. Voraussetzung ist allerdings, daß die beiden Lichtwege gleichlang sind oder sich in der Länge durch eine gerade Anzahl halber Wellenlängen unterscheiden. Für diesen Ausgleich dienen zwei in den Lichtweg eingebaute Glasfaserkabel.

Das beschriebene Verfahren zur Identifikation von Linienmustern kann für alle vorkommenden Fälle verwendet werden, in denen Linienmuster oder deren eventuelle Veränderungen erkannt werden müssen, z.B. in der Kriminologie zur Identifikation von Personen anhand der Fingerabdrücke, oder auch in der Erdkunde und Ozeanographie zur Untersuchung zeitlicher Veränderungen an Hand von Luft- oder Satellitenaufnahmen.

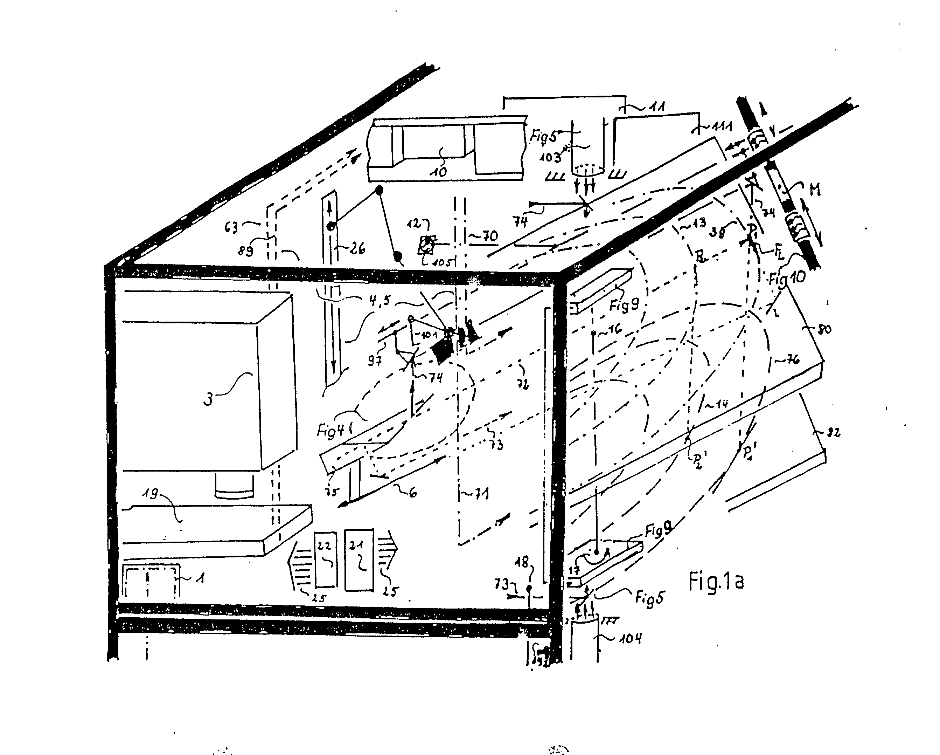

Die nachstehenden Figuren 1 bis 11 veranschaulichen das erfindungsgemäße Verfahren und insbesondere seine Anwendung für die Sicherung von verschließbaren Behältern und Räumlichkeiten. Die in den Figuren benützten Zahlen zur Kennzeichnung der einzelnen Teile sind in einer nachfolgenden Liste zusammengestellt. Punkt "1" und "2" dieser Legende S. 18 definieren die Begriffe "IST" und "SOLL" wie sie hier insgesamt zu verstehen sind.

Fig.1a zeigt eine im oberen Teil eines Kassenschranks eingebaute Vorrichtung mit einer schematischen Darstellung der für die Ausübung der Erfindung erforderlichen Vorrichtungen.

(1) ist der Eingabeschlitz für die zu prüfenden Fingerabdruckkarten ("IST-Abdrucke) ist in Fig. 1b dargestellt. Die Umstellung vom "IST"-Vorgang auf den "SOLL"-Vorgang erfolgt durch den Schalter (142) über die Kontaktleitungen (25) und den Computer (22). (3) ist ein Episkop zur Projektion auf die Sofortbildkamera (3), die von den Fingerabdrücken ein Diapositiv erstellt. (63) und (89) sind die Transportwege für positive und negative Dias; in (10) sind drei Behälter zwei für die Ablage von SOLL- und einer für IST-Dias dargestellt. Vom Dia-Behälter führen die Transportwege (70) und (71) weiter zum Prüfplatz für die Dias.

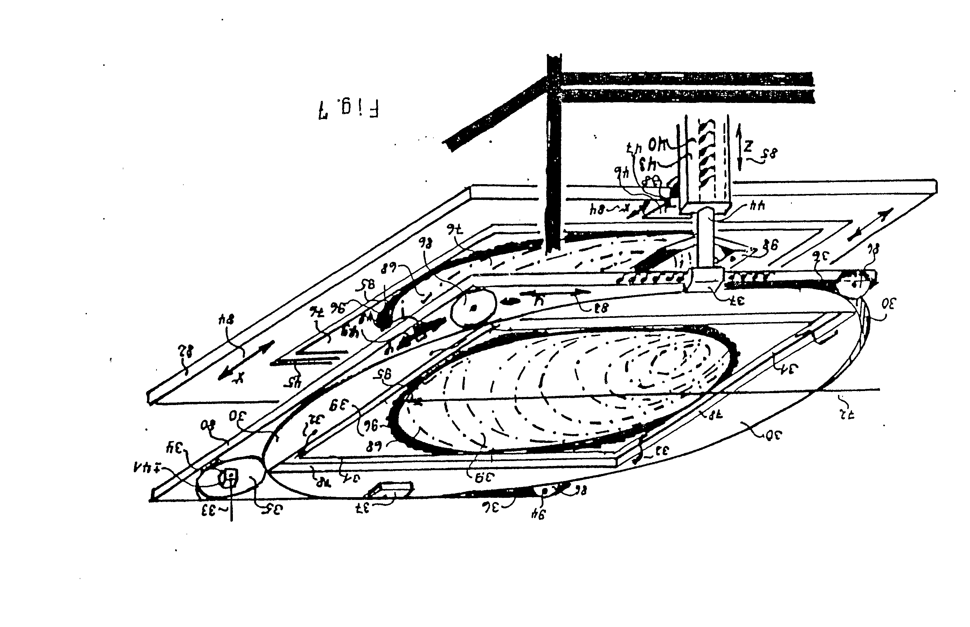

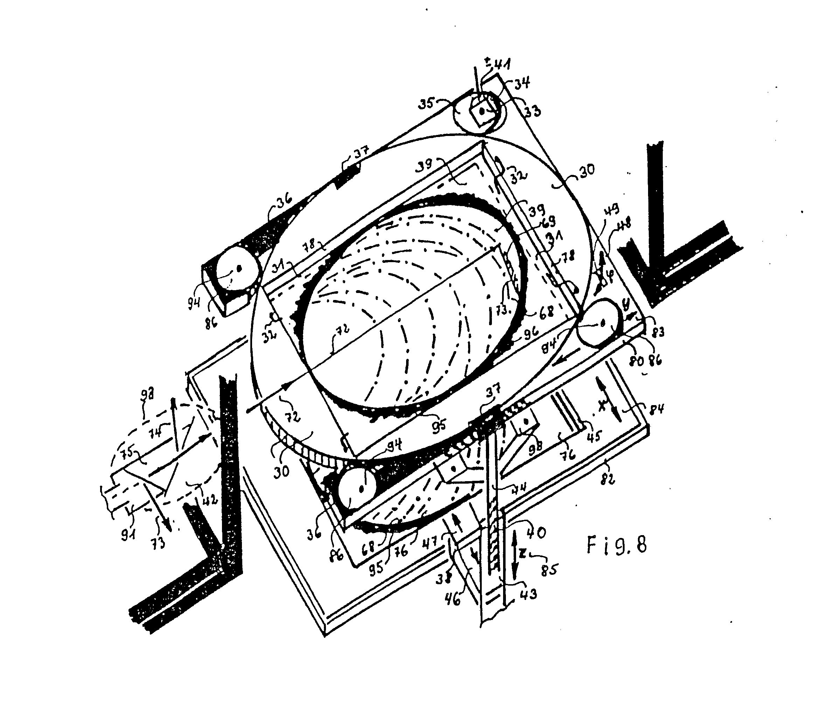

(26) zusammen mit (101) ist ein schematisch dargestellter Roboter, gesteuert vom Computer (26), der mittels Ansaug-und Greifvorrichtungen alle Transporte der Dias übernimmt. (80) ist der Plattenrahmen zur Aufnahme der SOLL-Dias während der Prüfung, (82) die analoge Vorrichtung für die IST-Dias. Diese Vorrichtungen sind in den Fig. 7 und 8 detaillierter dargestellt.

Dabei sind in der Figur die Fingerabdrucklinien (13), (14), (39) und (76), sowie die Dreh- und Bewegungsgestänge (16) und (17) andeutungsweise eingezeichnet, ebenso die Laserquelle (21), die Laserstrahlen (72-74) sowie die Umlenkungen der Laserstrahlen verwendeten Vorrichtungen (6) und (97) und der Laser-Impulszähler (21).

Fig. 1b zeigt eine vereinfachte Darstellung eines Teils der Vorrichtungen von Fig. 1a. Sichtbar ist die Tresortüre von vorne· mit dem Druckknopf (7) und seiner Umrandung (24) sowie dem Eingabeschlitz (2) für die SOLL-Abdrücke.

(142) ist ein Schalter, der für den Computer in gedrücktem Zustand den IST-Weg, in ungedrücktem Zustand den SOLL-Weg signalisiert.

Durch Drücken des Knopfes (7) kann aus dem Schlitz (2) eine leere Karte zur Abgabe der Abdrücke entnommen werden. Diese wird nachher in den Schlitz zurückgesteckt, worauf der Knopfrand (24) aufleuchtet.

(18) ist die Vorrichtung, die vom Computer (22) den Befehl für "Öffnen" oder "Nicht-Öffnen" des Türschlosses (20) erhält.

Fig. 2 zeigt schematisch zwei Fingerabdrücke, mit dem auf der rechten Seite eingezeichneten willkürlich angenommenen Zentrum Z, sowie vier Strahlen des als Koordinatennetz dienenden Strahlenbündels und den auf den Strahlen eingezeichneten Kreuzungspunkten $P_1^0$, $P_2^0$, ... $P_n^0$, $P_1^1$, $P_2^1$, ... $P_n^1$, ... etc. Rechts ist der zeichnerische Ausdruck der Erfassung der mengentheoretischen Folgegliedern gemäß der mathemat. Darstellung im Text, links dag. der Anspruch nach der nachgen. orthogonalen Kontrolle, welche alle Auswertungen auf -Genauigkeit während des Vorganges halten.

Nach dieser Kontrolle und der unabhängigen Findung von "P1`-Z`" zu "P1-Z" heißt als Kürzel dieses Verfahren P1-Z-Verfahren, Fig. 4 Näheres.

Die Kontrolle (linke Seite) beruht darauf, daß ein vertikal auf eine Spiegelplatte auftreffender Lichtstrahl in sich selbst reflektiert wird, der Laserstrahl L3 also in S23 wieder gemessen werden kann. Zusätzlich muß eine Lichtspannung in HS1 erkannt werden.

Dies heißt praktisch, daß mit der Sonde S2 z.B. über das Soll-Dia an der betreffenden Stelle gefahren werden wird, ebenso unter das Ist-Dia mit der Sonde HS1 und dazwischen mit S1 und zwar planparallel zu den Dias und dem von Sp5 kommenden Laser, der das Ist- wie auch das Soll-Dia durchstrahlt, durch die Stelle (140) von S2 beim Soll-Bild und von S1 zwischen Soll- und Ist-Bild hindurchgeht, dann auf HS1 auftrifft und von diesem Spiegel HS1 reflektiert über Sp5 einmal an der Sonde S23 erkannt wird und einmal in HS1, weil dieser Spiegel HS1 auch einen ankommenden Lichtstrahlspannungsstoß wie ein Belichtungsmesser nötigenfalls registrieren kann; diese Doppelmessung des Lichtstrahls in HS1 und S23 erst macht die 90°- und oder Orthogonalkontrolle ergebnissicher.

S1 und S2 bieten die Gewährleistungen: S2 weist L3 auf $P_1^0$ hin, S1 dag. auf $P_1^0$`. Die Emissionsmessungen von S1 an der Stelle $P_1^0$` des Ist-Bildes und von S2 an der Stelle $P_1^0$ des Soll-Bildes werden durch HS1 überwacht. Die Reihenfolge S2, S1, HS1 und Reflexionen über S1, S2 an Sp5 zurück ist der Lichtweg von L3 mit Messung in S23. Trifft der Lichtstrahl in S2 den Punkt $P_1^0$ nicht oder in S1 nicht den Punkt $P_1^0$`, so gelangt er nicht nach HS1 und der Impuls bleibt aus, wie auch der reflektierte Strahl in S23 nicht empfangen wird. Nur Messung in S23 bedeutet nicht notwendig auch Reflexion in HS1 und nur Registrierung in HS1 bedeutet nicht notwendig Richtigkeit der notwendigen 90°.

### Symbolbeschreibungen

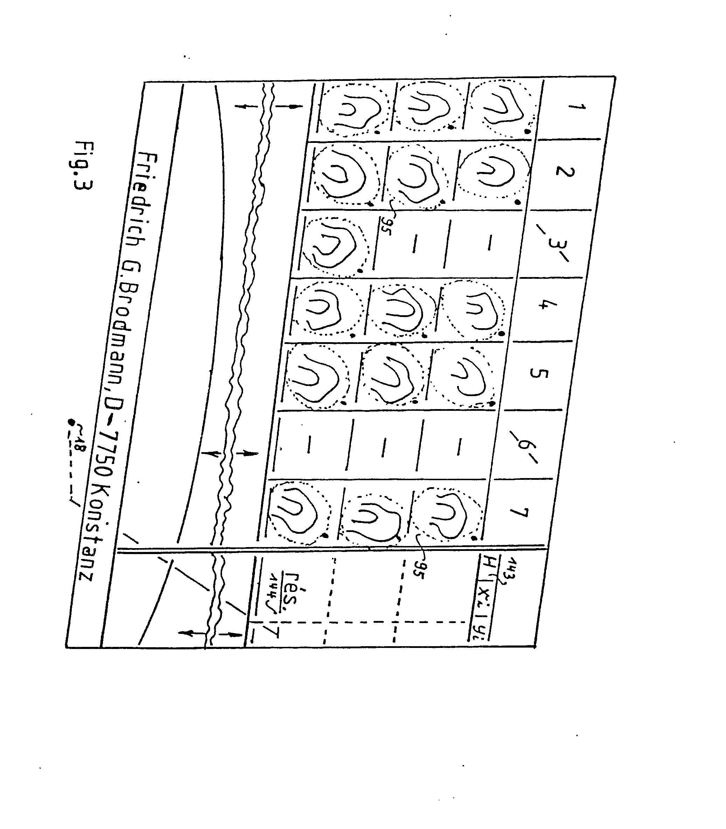

L3 Laserstrahl L3 bedeutet Legendennummer (74)
Sp5 Spiegel 5 vgl. Fig. 4
Z,Z` geom. Größen des P1-Z-Verfahrens
$P_2^{11}$, $P_2^{11}$` geom. Größen des P1-Z-Verfahrens
T14` Tangente vonL2 an IST-Abdruck unten
T 13 Tangente von L2 an SOLL-Abdruck oben
"99" siehe Legendennummer
S1 Teil von (99) siehe Fig.4, 3-flächiger Spiegel mit (140)
S2 Teil von (99) siehe Fig.4, 2-flächiger Spiegel mit (140)
HS1 Teil von (99) siehe Fig.4, 1-flächiger Spiegel zur Reflexion

Fig. 3 zeigt eine für die Identifikation vorgesehene Abdruckkarte mit drei Zeilen zu je 7 Abdrücken für drei Personen gleichzeitig. In den Kolonnen 3 und 6 sind ganz oder teilweise Leerstellen vorgesehen, die für die Identifikation nicht benötigt werden. Auf der rechten Seite befindet sich ein Feld für Bestätigung oder Nichtbestätigung der verglichenen Abdrücke einer Zeile.

Fig. 4 veranschaulicht das im folgenden P1-Z-Verfahren genannte Verfahren zur Bestimmung des ersten Punktes $P_1^0$ durch Legen der Tangente an einen Punkt der äußersten Abdrucklinie, mit dem um das Zentrum Z drehbaren Laser und den als "orthogonales Dreibein" dienenden Teilstrahlen L1,L2,L3.

Die Laserquelle (91) ist um den Drehpunkt (D1 = 0) zu bewegen von einem Punkt P1 aus, der nach dem analogen Vorverfahren mittels der Orthogonalitätskontrolle unter Hilfe von R99 (Fig.2, Fig. 9) von Ist hochgeholt wurde. Der von Sp4 kommende Laser L2 wird über $P_1^0$` zurückreflektiert nach S1 auf einer Fläche mit (140). HS1 und S1 wandern so zueinander, daß sie schließlich zusammenfallen und L2 gleichzeitig Tangente in $P_1^0$ ist, d.h. $F_1 = 0$.

Die Orthogonalität muß in P1 nicht mehr gegeben sein, sondern sie wird nach dem "P1-Z"-Verfahren (Tangente/Normale) in $P_1^0$ gesucht.

P1 wird durch L3 mittels R99 vom Punkt $P_1^{'}$ ° des Ist-Bildes hochgeholt und wird von dort auf die Abdrucklinie kürzester Entfernung des Vergleichsabdrucks gebracht und ist so der Anfangspunkt des Verfahrens.

Liegt dag. ein Sonderfall vor in $P_1^0$ , so lag er auch in $P_1^{'}$ ° vor, und wird als Spitze, Endpunkt und dgl. direkt angegangen, falls eine Tangente/ Normale nicht zu bestimmen ist. Danach wird auch Z von Z` über die Orthoganitätskontrolle hochgeholt. Es muß beachtet werden, daß nach Ermittlung von $P_1^0$ und Z der Drehpunkt D1 nach D2 verlegt wird, was über die Orthogonalkontrolle der Geraden Z`,D2,Z zu erreichen ist. D2 wird so in den Strahl ZZ` eingebracht, daß zuerst der Strahl ohne D2 durchläuft, dann durch Einbringen von D2 unterbrochen wird, worauf dann eine feine Öffnungsdüse in der Mitte von D2 den Strahl wieder durchläßt, wobei D2 gleichzeitig magnetisch festgemacht wird als neues Drehzentrum und die Laserquelle magnetisch auf ihre neue Halterung D2 gesetzt ist. Vom neuen Drehzentrum D2 = Z werden alle Abstandsvermessungen vorgenommen. Liegt bei Ermittlung einer der Punkte $P_1^k$ (Fig. 2) eine Abdruckschwäche vor, so ist dieselbe nach Fig. 5 auf dem $\phi_k$-Strahl zu beheben. Im Besonderen zeigt Fig. 4 die Laserquelle (91), dessen Laserstrahl an HSp3 zu L2, an HSp2 zu L3 und L1 geteilt wird, welche über Umwege und Spiegel (L2 über Sp2 und Sp4), (L3 über Sp3 und Sp5) in $P_1^0$ wieder zusammengebracht werden so, daß sie dort ein orthogonales Dreibein bilden. Alle drei Strahlen können in sich über R99 wieder reflektiert werden und an S21, S22, S23 empfangen und erkannt werden. Durch die Reflexion soll die Orthogonalität von L1,L2,L3 erkannt werden, die Anwendbarkeit der 90°-Kontrolle gesichert sein und der Flächeninhalt (69) zu null gemacht werden.

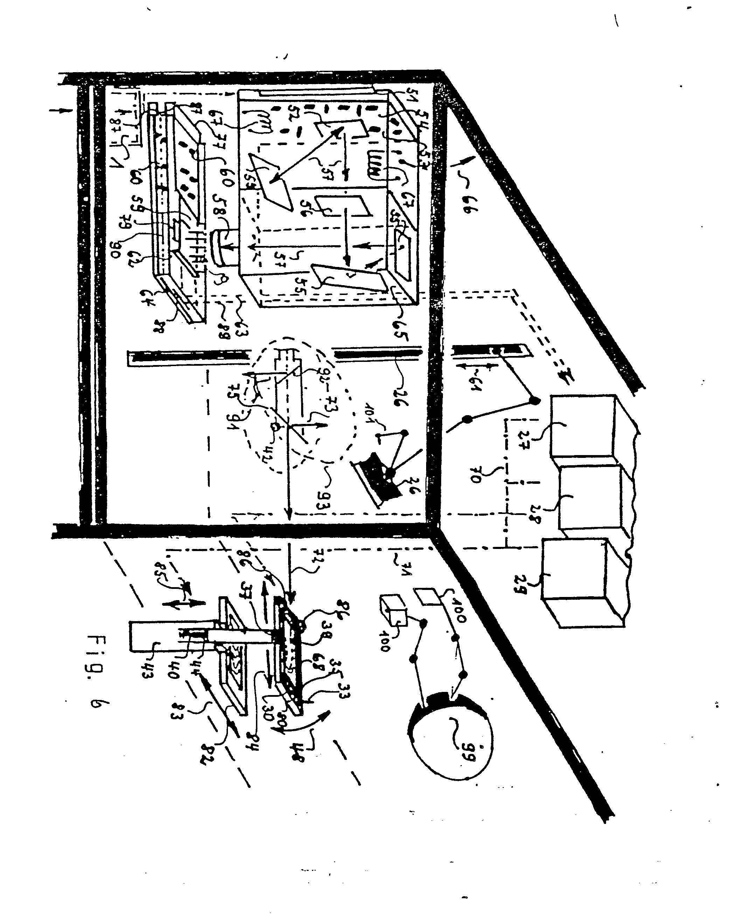

Der Spiegel Sp1 registriert die ausreichende Stärke des austretenden Lasers L1 und damit durch diejenige von L2 und L3. Impulsmessung als Abstandsbetragsmaß wird nach (99) Fig. 4 1 λ genau ermittelt, wenn die Sonde 100, Fig. 6 in der Bedeutung von S1, S2, HS1 Fig. 4 sich mit zwei Sondenteilen an den Anfang und Endpunkt der Strecke begeben, wobei die eine Sonde festbleibt und die andere auf die festbleibende zuwandert pro λ/2, weil Auslöschung, einen Impuls abgebend. Die Zahl n der abgegebenen Impulse, in (21) registriert, entspricht genau der math. Folgezahl $k_1^j$ gemäß Fig. 2. Verwirklichung durch Relaisperrkreis für Auslöschung, die auftritt, wenn Strahl und reflektierter Strahl am Meßpunkt des wandernden Spiegels eine Phasendifferenz von n x λ/2 haben, wo gleichzeitig ein zweiter Kreis geöffnet wird und je λ/2 oder je Öffnung einen Impuls abgibt. n = 1, 2, ... n

## Symbolbeschreibung

99 Teilroboter mit Arbeitsmatrix in $t_1$, $t_2$, $t_3$, .. $t_n$-Prozessen, angewiesen je durch Computer (22) im folgenden R99 genannt.

S1 Würfelförmige, dreiflächige Spiegelsonde des R99 mit drei ortssteuerbaren Gelenken, drei Armen, in ihrem Bereich die Koordinaten (x,y,z) nachbildend, wovon eine oder zwei Flächen einen Laserdurchlaßpunkt (140) aufweisen, dag. die anderen nicht, weiter bestehend aus einem anzulegenden Strahlungsfeld zur Emissionserkennung zur Verstärkung des Poynting`schen Vektors.

S2 Zweiflächige, zueinander rechtwinklige Spiegelsonde des R99 als Reflektor mit drei ortssteuerbaren Gelenken, drei Armen, in ihrem Bereich die Koordinaten (x,y,z) nachbildend, wovon eine Fläche einen Laserdurchlaßpunkt (140) aufweist und strahlenverstärkende Emissionserkennung besitzt.

HS1 Einflächige Hilfsspiegelsonde des R99 als Reflektor mit drei ortssteuerbaren Gelenken, drei Armen, in ihrem Bereich die Koordinaten (x,y,z) nachbildend.

$F_1$ Fläche, geom. Größe zum P1-Z-Verfahren

P1, $P_1^{'}$ ° Punkt, geom. Größe des P1-Z-Verfahrens

$P_1^0$ , $P_2^0$ , Punkte, geom. Größen des P1-Z-Verfahrens

P1-Z Abkürzung für die Prozedur, nach der 2 Punkte $P_1^0$ und Z sowie die Verbindung derselben vollständig genügen, um zwei ebene Muster Ist/Soll einander exakt zuordnen zu können.

L1,L2 siehe Punkte (72), (73) der Legende der Indexzahlen

Sp2, Sp4 Umlenkungsspiegel von L2

Sp3, Sp5 Umlenkungsspiegel von L3

Z` Zentrum IST, Fig. 2

Z Zentrum SOLL, Fig. 2

O geometrischer Drehpunkt von D1

$\psi$ Winkel, den die Laserquelle um O beschreibt bei der Bestimmung von $P_1^0$ und Z bzw. $P_1^{'}$ ° aus P1 über $P_1^{'}$

D1 erster Drehpunkt der Laserquelle bei der Bestimmung von $P_1^0$ und Z bzw. $P_1^{,0}$ und $Z^`$

D2 zweiter Drehpunkt der Laserquelle nach der Bestimmung von $P_1^0/Z$ bzw. $P_1^{,0}/Z^`$ . .

D1D2 magn. Transport der Laserquelle "91" mit magn.Anzug sowie Lösung in den Haltepunkten D1 und D2.

HSP1 Halbspiegel 1, den Laserstrahl (L1) teilend in L1 sowie den Empfangsteil Sp1, einen reflektierten Laserstrahl L1 sich teilend in einen reflektierten Teil L1 sowie einen Empfangsteil S21.

HSP2 Halbspiegel 2, den Laserstrahl (L1 + L3) teilend in einen Strahl L1 und einen Strahl L3, den reflektierten Strahl L3 sich teilend in einen Empfangsteil S23 sowie einen Rest-L3, den reflektierten Teil L1 von HSp1 ebenfalls additiv zu L3 sich teilend in einen Empfangsteil S23 sowie einen zweiten Rest-L1.

HSP3 Halbspiegel 3, den Laserstrahl (L1 + L2 + L3) teilend in einen Strahl (L1 + L3) und einen Strahl L2, die reflektierten Strahlen von HSp2 teilend in einen Empfangsteil S22 sowie einen Quellenteil, den reflektiert Strahl L2 von Sp2 her sich teilend in einen additiven Empfangsteil zu S22 sowie einen Anteil zurück zur Quelle.

Sp1 Signalisierten den Ausgangsstrahl L1 als Maß der Ausgangslaserstärke.

S21 mißt Reflexionen von L1

S22 mißt Reflexionen von L2 additive im Spannungsmaß

S23 mißt Reflexionen von L3 additiv im Spannungsmaß

Fig. 5 veranschaulicht das interferometrische Verfahren gemäß Anspruch 1c) zur Identifikation von ausge-wählten schlecht festlegbaren Sonderpunkten. Im weiteren als Kürzel heiße dieses Verfahren $\lambda$-Spur-Verfahren. Es muß dem P1-Z-Verfahren nachhelfen, falls ein oder zwei auf demselben $\phi_k$-Strahl liegende Nachbarpunkte Abdruckschwächen aufweisen.

Haben sich bei der Verschiebung $\Delta u$ von A gegen B an der Stelle $P_i^k$ erste Dunkelzonen von Beugungs-spektren eingestellt des monochromatischen Lichtes der Wellenlänge $\lambda$, dann darf ohne Einschränkung der Allgemeinheit angenommen werden, daß dieselben Verschiebungen $\Delta u$ am selben Laserstrahl $\phi_k$ sich auch bei den Nachbarpunkten $P_i^k{}_{+1}$ und $P_i^k{}_{-1}$ einstellen müssen; daher sind die richtigen Digitalstellen von $P_i^k$ bei der gleichen Verschiebung $\Delta u$ zu erwarten.

Aus dem richtigen Ergebnis des Beugungsbildes an $P_i^k{}_{-1}$ und $P_i^k{}_{+1}$ darf bei einer $\Delta u$-Verschiebung zwischen SOLL-pos.-Dia und IST-neg.-Dia auf das richtige Ergebnis an der Stelle $P_i^k$ geschlossen werden.

Eine solche Schwäche in $P_i^k$ tritt auf, wenn das Dia-pos.-SOLL "A" und Das Dia-neg. "B"-IST aus der monochromatischen Lichtquelle (104) in (105a) einen Empfang durch den Belichtungsmesser PhS105a zuläßt, also eine größere als die $\Delta u$-Verschiebung existiert.

In diesem Fall, da es nur geringe Abdruckschwächen sind, wird an dem Schirm (11) ein Beugungsspektrum auftreten mit den beiden Dunkelzonen erster Art P und $P_,$ wenn "A"-Soll-pos. gegen "B"-Ist-neg. bis auf Spaltbreite verschoben wird.

"IST" als Urtyp stimmt immer, daher kann ein Fehler nur bei "A"-Soll-pos. liegen. Der Abstand BP` BP wird mittels (99) ermittelt und die Mitte M und auch BP und BP` vom Laser L3a (74a) auf dem Schmalfilmstreifen "F" als düsenfeine Durchlässe für $BP_i^k$, M, $BP_i^{,k}$ etwa von der Größenordnung doppelter Amplitudenhöhe des L3a) markiert. "F" wird für jeden Vorgang über die Rollen R1 und R2 um die Länge $BP_i^{,k}/BP_i^k$ fortbewegt. Über die düsenfeinen Durchlässe trifft L3a bei "M" auf die Polarisationsonde PS105b und von dort auf den Spalt "b". Dort wird er von L3b erkannt und auf "b" registriert als die gesuchte Korrektur $P_i^k$, nachdem der ganze Vorgang zuerst an BP $_{i-1}^{,k}/BP_{i-1}^k$ sowie an BP $_{i-1}^{,k}/B_{i+1}^k$ vorgenommen wurde, bis die scharfen Dunkelzonen der ersten Beugungsspektren sich ausbildeten.

Dabei wird an der Stelle des Spaltes b auf "A" soviel geschwärzt, bis die ersten Dunkelzonen an $BP_i^{,k}/BP_i^k$ für $P_i^k$ erscheinen, erkannt durch PhS105a, und sich der Spalt ausbildet. Ersatzweise kann die Schwärzung auch durch eine Vollschwarzfolie "G" erfolgen, welche von "A" unterhalb "B" gegen "B" hin langsamst vorgeschoben wird, um die ersten Beugungsringe zu erhalten.

Erst jetzt beginnt oben beschriebener Vorgang zur exakten Festlegung von $P_i^k$. Das Linsensystem (102) besorgt die Abbildung. Es liegt zwischen A/B und (11). Wird es umgedreht, so wird die Quelle (103) bei umgekehrtem Lichtweg die markierten Beugungspunkte BP undBP` sowie deren Mitte M auf A/B abbilden, wobei M auf dem Spalt "b" abgebildet und mittels L3b markiert eine Kontrolle oder einen anderen Weg darstellt.

L3a ist wie eine Reflexion von L3b und L3b wie eine solche von L3a, wobei die Lichtstärkenwirkung von jeweils dem anderen S2j erkannt werden kann.

Symbolbeschreibungen

97b im Gegensatz zu (97a) ist für das $\lambda$-Spur-Verfahren um 90° schwenkbar nach unten das Gestell 97b anzubringen

Sp6 Spiegel, orthogonal zu Halbspiegel HSP2 befestigt in "C" und ist eventuell zuerst umzuklappen, wird dann eingeschoben in Pfeilrichtung, verwendet nur für das λ-Spur-Verfahren zur Teilung von L3 in L3a und L3b, beide in z-Richtung; L3a fällt wie bei Fig. 4 auf Sp3, während L3b auf Sp2 des um 90° gedrehten Gestells 97b fällt. (73) wird somit durch (74b) ersetzt.

C Befestigungspunkt von SP6 an (91)

L3a,L3b entstammen dem geteilten Strahl L3 und sind beide in z-Richtung verschobene Parallelstrahlen

E Komplex, bestehend aus

      a) Sp3, Sp5, L3a als monochromatisch stark gebündelter Laserstrahl oder

      b) Sp2, Sp4, L3b als monochromatisch stark gebündelter Laserstrahl D Komplex bestehend aus

      a) (103), monochromatische Lichtquelle eines breiteren Laserstrahlenbündels oder

      b) (104), monochromatische Lichtquelle eines breiteren Laserstrahelnbündels

PhS 105a Photosonde, erkennt die Dunkelzonen

PS 105b Polarisationssonde, erkennt Licht verschiedener Polarisationsebenen und gekreuzte Strahlenpunkte Ea,Da Komplexe E und D auf Gestänge 97a, in der Reihenfolge E,D

Eb,Db Komplexe E und D auf Gestänge 97b in der Reihenfolge D,E

EaDa - $d_a$, ist Ea links von Da angeordnet auf 97a, so muß Eb rechts von Db angeordnet sein auf 97b und zwar in gleichem Abstand zueinander, d.h. $d_a = d_b$, wobei Ea, Da, Eb, Db ein Rechteck bilden.

DbEb = $d_b$

EaDaEbDb ist demonstriert an den Punkten BP $^{\backslash k}_{i-1}$ /$BP^k_i$ −₁ für Ea/Db und BP $^{\backslash k}_{i+1}$ /$BP^k_i$ +₁ für Da/Eb

R1 Erste Transportrolle für den Schmalstreifen "F"

R2 Zweite Transportrolle für den Schmalfilmstreifen "F"

F Schmalfilmstreifen zur Aufnahme von düsenfeinen Durchlässen als Markierungspunkte, auch als Laserlichtspeicher in Lochstreifenart verwendbar (Breite etwa 5mm)

$M^k_i$ Mitte der Distanz $BP^{`\,k}_i$/$BP^k_i$

BP $^{\backslash k}_{i+1}$ /$BP^k_i$ +₁ Beugungsspektrum IST-neg./SOLL-pos. an der Stelle P $^{\backslash k}_{i+1}$ /$P^k_i$ +₁

BP $^{\backslash k}_{i-1}$ /$\dot{B}P^k_i$ −₁ Beugungsspektrum IST-neg./Soll-pos. an der Stelle P $^{\backslash k}_{i-1}$ /$P^k_i$ −₁

$BP^{`\,k}_i$/$BP^k_i$ gesuchtes Beugungsspektrum, auf dem gleichen $\phi_k$-Strahl

L3a markiert Feinstdüsen auf "F" und verlängert sich durch Anvisieren von PS105b auf "b" hin

L3b markiert auf die Anvisierung von L3a den genauen Punkt $P^k_i$

S1,S2,HS1 an (99) mit (140) erkennen die Abdrucklinien an der Laserreflexionslinie, analysiert u.a. durch im Handel erhältliche Photodioden und Photoelemente, speziell die ständig verbesserten "CCD", unter Anwendung der Hallwachs- Kerr- Pockels-Effekte oder auch der Ramanlinie λ +/-ε bei Ausschalten der Laserfrequenz λ.

G Vollschwarzfolie, deren Verschiebung eine echte Schwärzung mit Laserstift ersetzt.

A SOLL-Dia-pos. oder IST-Dia-pos.

B IST-Dia-neg.

α Beugungswinkel der ersten Zonen

b Spaltbreite beim Beugungsvorgang

Fig. 6 zeigt nochmals einen Teil des Aufbaus über dem Kassenschrank mit den Apparaturen zur Herstellung von Diavergrößerungen der Abdruckkar ten sowie im rechten Teil zur Identifikation der Dia-Vergrößerungen nach den erfindungsgemäßen Verfahren.

Fig. 7 zeigt im Detail die im rechten Teil der Figur 6 dargestellte Apparatur mit den Mechanismen zur Drehung und Translationsbewegung der übereinander angeordneten Dia-Vergrößerungen.

Fig. 8 zeigt die in Fig. 7 dargestellte Apparatur in einer veränderten Ansicht.

Fig. 9 ist eine schematische Darstellung des zum Vergleich der beiden Fingerabdruckvergrößerungen benutzten holographischen Verfahrens.

Symbolbeschreibungen

$h_1$ Höhe des Bildes "IST" (80)

$h_2$ Höhe des Bildes "SOLL" (82)

$h_1$-$h_2$ Abstandsdifferenz IST/SOLL während der Auswertung

Fig. 10 ist eine Darstellung der Apparatur für das In-Deckungbringen der beiden elliptisch begrenzten Dia- Vergrößerungen

Symbolbeschreibungen

Sp5 siehe Fig. 4
S22 siehe Fig. 4
φ Drehwinkel von (30)
M div. Mitten von (146) und (148)
d ebener Diagonalabstand eines entsprechenden Ist/Soll-Punktes bei eingestelltem Winkel
$\Delta x$ x-Koordinate zu d
$\Delta y$ y-Koordinate zu d
$Q_1$ Halbstrahl-L3-Auftreffpunkt auf dem Ellipsenrand
$Q_1'$ L3-Auftreffpunkt auf Prisma 124
$Q_2$ Halbstrahl-L3-Auftreffpunkt auf dem Ellipsenrand
$Q_2'$ L3-Auftreffpunkt auf Prisma 123
$R_2$ Gegenpunkt von $Q_2'$ auf (123)
$R_1$ Gegenpunkt von $Q_1'$ auf (124)
$T_1$ Ellipsentangente in $Q_1$
$T_2$ Ellipsentangente in $Q_2$
Fig. 11 Gesamtübersichtsdarstellung

Legende zu den in den Figuren 1a bis 10 benutzten Indexzahlen:

1 Eingabestelle für die Karte mit den zu identifizierenden Abdrücken. (IST) (1a, 1b)
2 Eingabestelle für die Karten mit den Vergleichsabdrükken (SOLL) (1b)
3 Episkop zur Herstellung der Dia-Vergrößerungen in Blockdarstellung (1b)
4 Transportweg für IST-Karten mit Fingerabdrücken gesamt (1b)
5 Transportweg für SOLL-Karten mit Vergleichsabdrücken gesamt (1b)
6 Mittelpunkt für Drehung der Laserquelle auf der Strekke $\overline{D1D2}$ bzw. dessen Schiene (4)
7 Druckknopf zur Einleitung des Prüfvorganges (1b)
8a und 8b, Schematische Darstellung des Kartentransports (1b)
9 Strahlenbündel des Episkops (1a,6)
10 Ablage für die Kartenstapel (1b)
11 Projektionsschirm (Fig. 5) für Interferenzmuster (Beugungsmuster)
12 Blockbild der Apparatur für das holographische Verfahren (1a)
13 Dia-Vergrößerung eines SOLL-Abdrucks (1a)
14 Dia-Vergrößerung eines IST-Abdrucks (1a)
15 Negativ-Dia des IST-Abdrucks (6) in "29"
16 Dreh- und Bewegungsgestänge für das IST-Bild (1a)
17 Dreh- und Bewegungsgestänge für das SOLL-Bild (1a)
18 Leitung für Öffnungsbefehl des Türschlosses (1b)
19 Sofortbild-Apparatur für Dia-Bilder (1a)
20 Türschloß (1b)
21 Impulszähler für Laser-Impulse zu koordinieren mit 99 (1a)
22 Kleincomputer in Blockdarstellung (1a)
23 Kartenstapel für leere Abdruckkarten (1b)
24 Anzeigering beim Druckknopf "Kartenmagazin leer"(1b)
25 Elektr. Verbindungskabel (1a)
26 Transportvorrichtung für Dia-Vergrößerungen, mit Greifarm nach Art wie 99, Kleinstroboter (1a)
27 Stapel von SOLL-Dias-positiv (6)
28 Stapel von IST-Dias positiv (6)
29 Stapel von IST-Dias-negative (6)
30 Großes Zahnrad für Drehung des Dia-Rahmens (7)
31 Vertiefung im Abdruckrahmen zur Aufnahme des Dias(7)
32 Blattfedern zum Andrücken des Dias in den Rahmen (7)
33 Achse fur das Antriebszahnrad 35 (7)
34 Antriebsmotor für das Zahnrad 35 (7)
35 Antriebszahnrad für das große Zahnrad 30 (7)

36 Schwenkbügel mit Schnappfeder für den Dia-Halterahmen (7)

37 Feingewinde für beidseitige Rahmenbewegung in y-Richtung (7)

38 Feingewinde für beidseitige Rahmenbewegung in x- Richtung (7)

39 das im Rahmen eingelegte SOLL-Dia (7)

40 Feingewinde zum heben und Senken des oberen Rahmens (7)

41 elektr. Teil zum Motor 34 (7)

42 Sonde zum Zählen der Laserimpulse (7)

43 Sockelteil für die Rahmen-Bewegung (7)

44 innerer Teil des Sockels 43 (7)

45 Vertiefung im unteren Rahmen zur Aufnahme des IST-Dia (7)

46 ausziehbare Halterung

47 beidseitige Aussparung am Dia Rahmen (7)

48 Drehwinkel des großen Zahnrads 30 (7)

49 Ablesegerät für Beginn und Ende der Drehung des Zahnrades (7)

50 Axonometr. Maßstab für Fig. 7: x:y:z = 1:0.8:1

51 Aufnahmeschlitz für Abdruckkarte im Episkop (6)

52 Öffnung für optischen Strahlengang (6)

53 Transportrollen für Abdruckkarte in x-Richtung (6)

54 Transportrollen für Abdruckkarte in y-Richtung (6)

55 3 Spiegel $S_1$, $S_2$, $S_3$ im Episkop (6)

56 Durchgangsöffnung für Strahlengang (6)

57 Strahlengang im Episkop (6)

58 Objektiv des Episkops (6)

59 freies Ende des Aufnahme-Sofortfilms (6)

60 Transportrollensystem für den belichteten Film (6)

61 Bewegung in z-Richtung auf- und ab des Tranpsorters 26 (6)

62 Schneidemesser für belichteten Film (6)

63 Transportweg zu den Dia-Stapeln-positiv 27 und 28 (1a)

64 Auflageplatte der Episkop/Aufnahmekamera (6)

65 Episkop.Gehäuse (6)

66 andere mögliche Anordnung des Episkop-Gehäuses (6)

67 Lampen des Episkops (6)

68 Fingerabdrucklinien Fig. 4

69 Fläche zwischen Sekante und Tangente an Abdrucklinie (4)

70 Transportweg SOLL-Dia zum Prüfrahmen (1a)

71 Transportweg IST-Dia zum Prüfrahmen (1a)

72 L1 direkter Strahl vom Laser (4)

73 L2 umgelenkter Laserstrahl tangential (4)

74 L3 umgelenkter Laserstrahl vertikal (4)

75 Laser-Quelle bei Drehbewegung, Arbeitspunkt (1a)

76 Diapositiv des IST-Abdrucks (1a)

77 unbelichteter Film für Sofortbildkamera (6)

78 Vertiefung im Rahmen für das IST-Diapositiv (7)

79 Vertiefung im Aufnahmetisch zur Umschaltung pos./neg. (6)

80 Tisch zur Aufnahme des oberen Rahmens für SOLL-oder IST-pos. (7)

81 Kontrollteil zum holographischen Auswerteverfahren (9)

82 Rahmen für das IST-Dia positiv oder das IST-Dia-negativ, je ob Eingabestelle 1 oder 2 benutzt wird (6, 7, 9)

83 Bewegungspfeil in y-Richtung Fig. 7

84 Bewegungspfeil in x-Richtung Fig. 7

85 Bewegungspfeil in z-Richtung Fig. 7

86 3 Führungsrädchen für das große Zahnrad 30 (7)

87 Unbelichteter Film für Negativ-Dia (6)

88 Schlitz für Negativbilder in der Auflageplatte 64 (6)

89 Transportweg für Negativ-Sofortbilder zum Dia-Stapel 29 (6)

90 SOLL-Filmstapel

91 Laser-Quelle (1a,5,6,9)

92 Halbspiegel HSp1, HSp2, HSp3 für Laserstrahl, Ges. system (4)

93 Bewegungsradius der Laserquelle 91 (4)

94 Achsen der Führungsrädchen 86 (7)

95 Elliptischer Ausschnitt der Dünnhandschuhe für Abdruck (7)

96 Abdrucktusche außerhalb des ellipt. Ausschnitts (7)

97 Gestänge für Spiegel Sp3 und Sp5, Fig. 4 als 97a sowie Sp2 und Sp4, Fig. 4 als 97b

98 Trägerhilfen für sichere Lage des Tisches Fig. 7 und Fig. 8

99 Laserimpulszähler zusammen mit 21, Miniroboter mit integrierter Arbeitsmatrix in $t_1$ ... $t_n$-Prozessen, angewiesen je durch Computer 22, im folgenden R99 genannt, nach Fig. 2, Fig. 4, Fig. 6.

100 Orthogonale Eckspiegel für die Errichtung der Tangente in $P_1^0$ , Gesamtsystemnummer für S1, S2, HS1 aus "99" (4), (6)

101 Automatisch gesteuertes Greifwerkzeug (1a)

102 Vergrößerungsobjektiv für das interferometrische Verfahren Fig. 5

103 monochromatische Lichtquelle Fig. 5

104 monochromatische Lichtquelle Fig. 5

105 Lichtstromempfänger, Belichtungsmesser Fig. 5 (105a, 105b)

106 reflektiertes Laserstrahlenbündel Fig. 9

107 Glasfaserbündel Fig. 9

108 Zerstreuungslinsen Fig. 9

109 Sammellinsen Fig.9

110 Glasfaserbündel Fig.9

111 Reflektorspiegel für Laserstrahlenbündel Fig.9

112 Vorrichtung 2 für Prüfung auf Auslöschung

113 Vorrichtung 1 für Prüfung auf Auslöschung

114 Sonde für Prüfung auf Auslöschung (9)

115 Spiegel Fig. 9

116 Spiegel Fig. 9

117 Spiegel Fig. 9

118 Spiegel Fig. 9

119 von 111 reflektierter Laserstrahl (9) ($Q_1$ = $R_2$ und $Q_2$ = $R_1$) (10)

120 Strecken- und Bedienungsmaß Fig. 9

    a) 107 = (139/115/116/111/117/118/112)-(2 x 139/111)

    b) 110 = (139/115/116/111/117/157/113)-(2 x 139/$h_1$ + 107)

121 Ellipsendurchmesser Fig. 10

122 Direktreflexionsweg Fig. 10

123 langer Halbspiegel Fig. 10, Prisma

124 Langer Halbspiegel Fig. 10, Prisma

125 Spiegel Fig. 10

126 Halbspiegel Fig. 10

127 Spiegel Fig. 10

128 vergl. Fig. 4

129 Gestänge Fig. 10

130 Gewinde rechts Fig. 10

131 Gewinde links Fig.10

132 Halterung Fig. 10

133 Bedingung für Arbeitslagepunkt der Ellipse, wo $Q_1'$ = $R_2$ und $Q_2'$ = $R_1$, Fig. 10

134 x-y-Bedingung $d = V \overline{\Delta x2 + \Delta y2}$ (10) siehe Legende "119" unten

135 Gestänge für die Spiegel 125 und 127

136 Andeutung von Fig. 9 in Figure 1a

137 Andeutung von Fig. 10 in Figur 1a

138 Andeutung von Fig. 5 in Figur 1a

139 Trennung der Strahlen L1 und L2 an Halbspiegel Fig. 9

140 Durchtrittsloch für L2 an der Sonde Fig. 4 und Fig. 6

141 Ablenkungswinkel der Laserquelle Fig.4

142 Umschalter SOLL/IST bei offener/geschloss. Schranktür Fig. 1a,1b,6

143 Markierung auf Karte Fig.3 für "richtig", Einzelteile

144 Öffnungsanweisung an Leitung 18 (3)

145 Andere Ausführung für Zahnrad 30, mit fester Achse Fig.10

146 Achse zu 145 (10)

147 Achsenverbindung zur Synchronbewegung von Drehung und x-y (10)

148 Hin- und Herbewegung der Prismen 123 und 124 über Gestänge 129 und die Rechts- und Linksgewinde 130/131 durch Synchronantrieb 148, Fig. 10

149 Verbindungsachse Fig. 10

150 Hin- und Herbewegung für Spiegel 126 und 127 (10)

151 Rechts- und Linksgewinde der Achse 150 (10)

152 Antriebskegelrad der Achse 149 (10)

| 153 | Halterung | Fig. | 10 |
|-----|-----------|------|----|
| 154 | " | " | " |
| 155 | " | " | " |
| 156 | " | " | " |

157 Halbspiegel, Fig. 9

Ablauf zum Thema Panzerschranköffnung: IST-Vorgang und SOLL-Vorgang einander gegenübergestellt.

IST-Vorgang der Öffnung

1. Offene Tresortüre, Beginn bei (1)

2. Aus dem Stapel (25) eine Karte entnehmen

3. Dünnhandschuhe mit ellipt. Ballenaussparung anziehen, Fingerabdrücke neu bzw. abgeändert abgeben

4. Karte an die Stelle (1) setzen, Türe offen lassen, d.h. der IST-Vorgang wird über Weiche IST abgewickelt, Start durch zweimaliges Drücken von (142) kurz hintereinander.

5. Der Auswertungsprozeß beginnt im Episkop (3)

6. (3) entwirft auf (59) über (58) ein Dia-positiv-Bild in den Maßen 10 x 10 s-w-s sowie ein gleiches Dia-neg.-Bild w-s-w in der Tischvertiefung (79) auf (64).

7. Dia-positiv und Dia-negativ werden von der Karte erzeugt, die der Reihe nach $b_{11}$, $b_{12}$, ... $b_{nn}$ heißen und per (26) in den Stapel (28) transportiert werden bzw. die der Reihe nach $c_{11}$, $c_{12}$, ... $c_{nn}$ heißen und per (26) in den Stapel (29) transportiert werden über die Wege (63) und (89), Fig. 1a.
Nach jedem Positiv-Dia wird sofort das Negativ-Dia erzeugt, indem sich die Tischklappe öffnet und der unbelichtete Negativfilm frei wird.

8. Aus (28) wird Dia $b_{11}$ abgerufen, aus (29) Dia $c_{11}$. $b_{11}$ kommt auf (80), $c_{11}$ auf (82).

9. Hierauf werden die vier Auswertungsverfahren mit immer steigenderer Genauigkeit angewandt: Fig. 10, Fig. 4, Fig. 5, Fig. 9

10. Der Reihe nach folgen dann die ganzen Stapel (28) und (29), $b_{12}$ wird mit $c_{12}$, $b_{13}$ mit $c_{13}$, ... $b_{nn}$ mit $c_{nn}$ verglichen.

11. Nach Abschluß aller Auswertungen und Richtigkeit wird die Türe geschlossen und probeweise ein SOLL-Vorgang absolviert.

SOLL-Vorgang der Öffnung

1. Drücken auf Knopf (7)

2. Karte erscheint in Schlitz (2), Rand (24) von (7) leuchtet auf

3. Dünnhandschuhe mit Abdruckaussparung der Ballen anziehen, Fingerabdrücke wie gespeichert abgeben.

4. Karte wieder in den Schlitz (2) zurückstecken, Randlicht (24) erlischt, (7) leuchtet rot auf solange der Auswertungsvorgang dauert.

5. Karte wird über (8b) nach oben transportiert nach Stellung (1) bei immer eingedrücktem Schalter (142), dann in das Episkop (3) eingebracht, (51) und (67) eingeschaltet.

6. (3) entwirft auf (59) über (58) ein Dia-positiv-Bild bei automatischer Belichtungs- und Zeitmessung der Größe 10 x 10 s-w-s

7. Karte wird über (53)/(54) für jede Abdruckstelle $a_{11}$, $a_{12}$, ... $a_{nn}$ an (52) transportiert, und dann als Dia-positiv per (26) der Reihe nach im Stapel (27) abgelegt um von dort abgerufen zu werden.

8. Aus (27) wird Dia $a_{11}$ abgerufen, aus (28) Dia $b_{11}$ wenn es sich um den P1-Z-Vorgang handelt, sonst aus (29) Dia $c_{11}$, wenn es sich um den $\lambda$-Spur-Vorgang handelt;
$a_{11}$ kommt auf (80), $b_{11}$ oder $c_{11}$ auf (82).

9. Hierauf werden die vier Auswertungsverfahren mit immer steigenderer Genauigkeit angewandt; Fig. 10, Fig. 4, Fig. 5, Fig.9.

10. Der Reihe nach folgen dann die ganzen Stapel (28) und (29), $a_{12}$ wird mit $b_{12}$ bzw. $c_{12}$, $a_{13}$ mit $b_{13}$ bzw. $c_{13}$, ..... $a_{nn}$ mit $b_{nn}$ bzw. $c_{nn}$ verglichen.

11. Nach Abschluß aller Auswertungen und Richtigkeit gemäß Fig. 3 erfolgt Öffnungsanweisung an (18) andernfalls ein einmaliges Wiederholungs- oder ein Falschzeichen.

## Ansprüche

1. Verfahren zur Identifizierung von Linienmustern, dadurch gekennzeichnet, daß man diese Muster, nach vorausgehender photographischer Vergrößerung in Form eines Diapositivs, nacheinander

a) durch genaues Übereinanderlegen mit einer photographisch negativen Diakopie eines vorgegebenen Sollmusters im gleichen Maßstab vergleicht, sodann

b) die Polarkoordinaten der Kreuzungspunkte des Linienmusters mit den Strahlen einer in der gleichen Ebene von einem gemeinsamen Zentrum ausgehenden regelmäßigen Strahlenschar bestimmt und mit den zuvor bestimmten und abgespeicherten entsprechenden Koordinaten des vorgegebenen Musters nach einem mathematischen Verfahren vergleicht und schließlich, falls die Maßnahmen a) und b) für die Identifizierung des Musters nicht ausreichen, einzelne charakteristische Punkte des Musters mit den entsprechenden Punkten des Sollmusters

c) mit Hilfe eines Lasers nach einem interferometrischen Verfahren oder/und

d) einem holographischen Verfahren unter sich vergleicht.

2. Verfahren gemäß Anspruch 1, dadurch gekennzeichnet,daß die genaue Positionierung des zu identifizierenden Musters über dem entsprechenden Sollmuster nach einem automatischen optoelektronischen Verfahren mit Hilfe eines Lasers erfolgt, dessen Strahl nach den drei Richtungen eines orthogonalen Raumkoordinatensystems aufgeteilt und mittels eines Systems von aus je drei orthogonal angeordneten Spiegeln bestehenden, dem Linienmuster automatisch nachgeführten Sonden wiederum in einem Punkt zusammengeführt wird, wobei die Orientierung nacheinander zuerst in Drehrichtung einer die beiden zu vergleichenden Muster senkrecht durchstoßenden Achse mittels eines auf das Diapositiv des zu identifizierenden Musters wirkenden Drehmechanismus, und nachher in den beiden in der Ebene der Muster liegenden, senkrecht zueinander ste henden Koordinatenrichtungen mittels zweier durch Feingewinde angetriebener Verschiebungsmechanismen erfolgt.

3. Verfahren gemäß einem der Ansprüche 1 oder 2, dadurch gekennzeichnet, daß im Verfahrensschritt a) die Identität der Muster mit einem optischen Verfahren nach Maßgabe der Lichtdurchlässigkeit des Systems der beiden genau übereinander angeordneten Diapositive festgestellt wird. (neg.IST mit pos. SOLL o.u.)

4. Verfahren gemäß einem der Ansprüche 1 bis 3, dadurch gekennzeichnet, daß im Verfahrensschritt b) der Abstand zwischen zwei auf einem Strahl liegenden benachbarten Kreuzungspunkten dadurch bestimmt wird, daß man entlang dem geometrisch definierten Strahl einen Laserstrahl errichtet und entlang dieses Laserstrahls mit einer photoelektrischen Sonde, welche sowohl die Linien, bzw. deren Kreuzungspunkte mit dem Strahl, als auch den Laserstrahl erkennt, entlangfährt, dabei längs des Strahls eine stehende Welle erzeugt und die auf der durchfahrenen Strecke liegenden Wellenmaxima zählt, diese aufgrund der bekannten Wellenlänge des Lasers in Längeneinheiten umrechnet und im Speicher eines elektronischen Rechners speichert, und sodann, durch Drehung des Lasers um jeweils gleiche Winkelbeträge, das Verfahren für sämtliche Strahlen der Strahlenschar wiederholt.

5. Verfahren gemäß einem der Ansprüche 1 bis 4, dadurch gekennzeichnet, daß im Verfahrensschritt c) je eine positive Diakopie des zu identifizierenden Musters und des Vergleichsmusters deckungsgleich übereinander angeordnet von einem Laserstrahl senkrecht durchstrahlt werden, wobei, von den zu untersuchenden ausgewählten Punkten auf einem Schirm Beugungsmuster entworfen und ausgemessen werden.

6. Verfahren gemäß einem der Ansprüche 1 bis 4, dadurch gekennzeichnet, daß im Verfahrensschritt d) die deckungsgleich übereinander angeordneten positiven Diakopien des zu identifizierenden Musters und des Vergleichsmusters in einer holographischen Anordnung von einem geteilten Laserstrahl auf zwei verschiedenen Wegen durchstrahlt werden, wobei die beiden Lichtwege durch zwischengeschaltete Glasfa-

EP 0 328 719 A2

serkabel auf gleiche Länge gebracht werden, und wobei die beiden Lichtwege nach Durchmessen des ganzen Weges auf einem gemeinsamen Schirm vereinigt werden, wo durch Auslöschung auf Identität der beiden Muster geschlossen werden kann.

7. Verfahren gemäß einem der Ansprüche 1 bis 6 dadurch gekennzeichnet, daß die zu vergleichenden Linienmuster Fingerabdrücke sind, die nach üblichen Verfahren durch Abdruck auf einer dafür vorgesehenen Identifizierungskarte gewonnen sind.

8. Verfahren gemäß Anspruch 7 mit auf ihrer Peripherie elliptisch begrenzten Fingerabdrücken, dadurch gekennzeichnet, daß man zu deren Herstellung Gummihandschuhe verwendet, die im Bereich der Fingerkuppen einen elliptisch geformten Ausschnitt besitzen.

9. Verfahren gemäß Anspruch 8 dadurch gekennzeichnet, daß zur Herstellung des elliptisch geformten Ausschnitts irgend ein Externgerät konstruiert wird.

10. Verwendung des Verfahrens gemäß einem der Ansprüche 1 bis 6 in der Medizin zur Vermessung zeitlicher Veränderungen in Gewebeproben durch entsprechender Vergleich photographischer Abbildungen.

11. Verwendung des Verfahrens gemäß einem der Ansprüche 1 bis 6 in der Biotechnologie für den Vergleich und die Vermessung von photographischen Bildern der Zellen und ihrer Komponenten.

12. Verwendung des Verfahrens gemäß einem der Ansprüche 1 bis 6 in der Erdkunde, Erdvermessung und Ozeanographie zur Erkennung und Vermessung zeitlicher Veränderungen in mittels photographischen Aufnahmen aus Flugzeugen oder Satelliten gewonnenen Bildern.

13. Verwendung des Verfahrens gemäß einem der Ansprüche 1 bis 6 in der Werkstoffkunde, zur Feststellung und Vermessung von Veränderungen des Werkstoffgefüges anhand photographischer Aufnahmen insbes. der organ./anorgan. Molekül- bzw. Atomstrukturen.

14. Verwendung des Verfahrens gemäß einem der Ansprüche 1 bis 7 in der Kriminologie zue automatischen Identifizierung von Personen anhand ihrer Fingerabdrücke.

15. Anwendung des Verfahrens gemäß einem der Ansprüche 1 bis 7 zur Sicherung von nur einem beschränktem Personenkreis zugänglichen Räumlichkeiten, insbesondere von Tresoren und Panzerschränken durch automatische Identifizierung der Öffnungsberechtigten Personen anhand von Fingerabdrücken.

16. Vorrichtung zur Anwendung des Verfahrens gemäß Anspruch 7, zur Freigabe des Öffnungsmechanismus von geschützten Räumlichkeiten, insbesondere von Tresoren und Panzerschränken aufgrund von auf einer Karte niedergelegten Fingerabdrücken, bestehend aus einer von außen zugänglichen Vorrichtung für die Eingabe der Karte mit den Fingerabdrükken, einer Vorrichtung für die photographische Erstellung einer vergrößerten Diapositivkopie des Abdruckmusters, einer Vorrichtung zum Vergleich dieser Diapositivkopie mit einer im Innern des geschützten Raumes gelagerten Sollkopie nach den im Anspruch 1 genannten Verfahrensschritten a bis d, Transportmitteln für die Beförderung der Fingerabdruckkarte zur photographischen Vergrößerungskamera und der zu vergleichenden Diapositive zur Vergleichsapparatur, einem elektronischen Rechner zur Auswertung der in der Vergleichsapparatur gemessenen Koordinatenwerte und zur Steuerung der für den Vergleich notwendigen automatischen Vorrichtungen, sowie einem aufgrund der festgestellten Identität von eingegebenen und gespeicherten Fingerabdruckmustern betätigten Mechanismus zur Öffnung der Türe.

17. Vorrichtung gemäß Anspruch 16 zur Freigabe des Öffnungsmechanismus von geschützten Räumlichkeiten aufgrund einer auf einer Karte niedergelegten Auswahl von Fingerabdrücken, dadurch gekennzeichnet, daß die Auswertungsresultate aller oder eines Teils der auf der Karte vorhandenen Fingerabdrücke derart miteinander verknüpft werden, daß nur die gemeinsame Richtigkeit aller geprüften Fingerabdrücke über die Öffnung der geschützten Räumlichkeit entscheidet.

18. Vorrichtung gemäß Anspruch 17 zur Freigabe des Öffnungsmechanismus von geschützten Räumlichkeiten, dadurch gekennzeichnet, daß von der Gesamtheit der eingegebenen Fingerabdrücke für die Auswertung eine Auswahl getroffen wird, die dem Fingerabdruckgeber gegebenenfalls nicht bekannt ist.

19. Vorrichtung gemäß den Ansprüchen 17 und 18 zur Freigabe des Öffnungsmechanismus von geschützten Räumlichkeiten, dadurch gekennzeichnet, daß für die kombinierte Auswertung die Fingerabdrücke von mehreren Personen verwendet werden, die auf einer gemeinsamen Karte abgelegt wird, wobei die Auswahl der in der Auswertung verwendeten einzelnen Fingerabdrücke einzelnen oder allen beteiligten Fingerabdruckgebern gegebenenfalls nicht bekannt ist.

20. Vorrichtung zur Anwendung des Verfahrens gemäß Anspruch 15 aufgrund des Vergleichs von eingegebenen mit im Innern gespeicherten Fingerabdrücken, dadurch gekennzeichnet, daß sie eine erste Apparatur zum Vergleich einer positiven Diavergrößerung der eingegebenen Fingerabdrücke mit einer negativen Diavergrößerung der entsprechenden gespeicherten Fingerabdrücke durch exaktes Aufeinanderlegen der beiden Diavergrößerungen und Messung des von einer Lichtquelle durchfallenden Lichtes enthält.

14

21. Vorrichtung zur Anwendung des Verfahrens gemäß Anspruch 15 aufgrund des Vergleichs von eingegebenen mit im Innern gespeicherten Fingerabdrücken, dadurch gekennzeichnet, daß sie eine zweite Apparatur zur Messung und Abspeicherung der Polarkoordinaten der Kreuzungspunkte der auf dem Diapositiv enthaltenen Abdrucklinien mit den Strahlen einer von einem gemeinsamen Zentrum ausgehenden regelmäßigen Strahlenschar gemäß Verfahrensschritt b des Anspruchs 1 enthält, wobei die Strahlen durch stufenweise Drehung eines Lasers um jeweils gleiche Winkelbeträge definiert werden, und die Messung der radialen Komponente durch Verschiebung einer photo elektrischen Sonde längs des Strahls erfolgt, wobei die radiale Differenz zwischen zwei auf einem Strahl liegenden Koordinationspunkten durch die Anzahl der zwischen den zwei Punkten gemessenen Wellenmaxima des Laserstrahls bestimmt wird.

22. Vorrichtung zur Anwendung des Verfahrens gemäß Anspruch 15 aufgrund des Vergleichs von eingegebenen mit im Innern gespeicherten Fingerabdrücken, dadurch gekennzeichnet, daß sie weitere Apparaturen für den interferometrischen und holographischen Vergleich ausgewählter Punkte auf der positiven Diavergrößerung mit entsprechenden Punkten einer ebenfalls positiven Diavergrößerung des vorgegebenen Vergleichsmusters enthält, bestehend aus einer die exakt übereinander angeordneten Diapositive durchstrahlenden, mit einer Spaltblende versehenen Laserlichtquelle und einer photoelektrischen Sonde zur Bestimmung der nach Durchstrahlung der beiden Diapositive entstehenden Beugungsmaxima und- minima einerseits und einer aus Spiegeln und Halbspiegeln, sowie Glasfaserkabeln aufgebauten holographischen Anordnung anderseits.

23. Vorrichtung zur Anwendung des Verfahrens gemäß Anspruch 15 aufgrund des Vergleichs von eingegebenen mit im Innern gespeicherten Fingerabdrücken, mit einem Mechanismus zum deckungsgleichen Übereinanderlegen eines vergrößerten Diapositivs des eingegebenen Fingerabdruckmusters mit einer wahlweise negativen oder positiven Diavergrößerung des im Innern gespeicherten Fingerabdruckmusters, dadurch gekennzeichnet, daß der Mechanismus zur Deckungsgleichen Positionierung der beiden Diakopien übereinander aus einem Laser besteht, dessen Licht mit einer Anordnung von Spiegeln und Halbspiegeln auf eine in der Ebene der Diakopien drehbare Platte mit zwei in der Ebene beweglichen Halbspiegeln geworfen wird, wobei im Moment, in welchem eine Achse der elliptisch begrenzten Abdruckmuster parallel zur Verbindungslinie der beiden beweglichen Halbspiegel liegt, der Strahl gemäß Fig. 10 in sich selbst zurückgeworfen wird.

24. Verfahren gemäß Anspruch 1 bis 6 dadurch gekennzeichnet, daß die zu vergleichenden Linienmuster einander auf die Genauigkeit der Wellenlänge des verwendeten Lasers vermessen und zugeordnet werden, gemäß einer orthogonalen Kontrolle mittels Reflexionsspiegel, Hilfsspiegel, Sonden und Reflexionsempfang.

25. Verfahren gemäß Anspruch 23 dadurch gekennzeichnet, daß Ungenauigkeiten beim Abdruckvorgang dadurch ausgeglichen werden, indem von der exakten Genauigkeit benachbarter Punkte und deren Beugungsspektren auf das gleiche Beugungsspektrum an der Ungenauigkeitsstelle geschlossen werden kann.

26. Verfahren gemäß Anspruch 1 bis 25 dadurch gekennzeichnet, daß von Punkt- und Flächenmustern auf Linienmuster übergegangen werden kann und umgekehrt.

27. Verfahren gemäß Anspruch 1 bis 26 dadurch gekennzeichnet, daß Linienmuster zum Vergleich zuerst axonometrisch einander zugeordnet werden müssen.

Fig.1a

Fig.1b

Fig.2

EP 0 328 719 A2

Fig.3

Friedrich G.Brodmann, D—7750 Konstanz

Fig.4

EP 0 328 719 A2

Fig. 5

Fig. 6

EP 0 328 719 A2

Fig. 7

Fig.8

Fig.9

Fig.10